# EUROPÄISCHE PATENTSCHRIFT

(11) **EP 2 715 201 B1**
(45) Veröffentlichungstag und Bekanntmachung des Hinweises auf die Patenterteilung: **24.11.2021**
(21) Anmeldenummer: 12731482.1
(22) Anmeldetag: 05.07.2012
(51) Int. Cl.: F16L 19/028, F16L 47/04, F16B 31/02, G01N 30/60

(54) **KOMBINATION AUS EINEM KUNSTSTOFFSCHLAUCH FÜR LABORGERÄTE UND EINEM SCHRAUBELEMENT**
COMBINATION OF A PLASTIC HOSE FOR LABORATORY EQUIPMENTS AND OF A THREADED ELEMENT
COMBINAISON D'UN TUYAU FLEXIBLE EN PLASTIQUE POUR APPAREILS DE LABORATOIRE ET D'UN ÉLÉMENT À VIS

(30) Priorität: 06.07.2011 DE 102011106696
(43) Veröffentlichungstag der Anmeldung: 09.04.2014
(73) Patentinhaber: LABOMATIC INSTRUMENTS AG, CH-4123 ALLSCHWIL (CH)
(72) Erfinder: MARCHAND, Claude, Louis, CH-4434 Hölstein (CH); FEHR, Christian, CH-4452 Itingen (CH)
(74) Vertreter: Manitz Finsterwald Patent- und Rechtsanwaltspartnerschaft mbB
(86) Internationale Anmeldenummer: PCT/EP2012/063162
(87) Internationale Veröffentlichungsnummer: WO 2013/004789

(56) Entgegenhaltungen:
- DE-A1- 2 518 563
- FR-A1- 2 841 946
- US-A1- 2006 236 825
- US-B2- 7 845 963

## Beschreibung

Die vorliegende Erfindung betrifft eine Kombination aus einem Kunststoffschlauch für Laborgeräte und einem Schraubelement, wobei das Schraubelement zum Befestigen des Kunststoffschlauchs an einem Gegenstück, wie einem Anschluss zu einer weiteren Leitung oder einem Geräteanschluss, wobei das Schraubelement aus einem ersten mit der Hand oder mit einem Werkzeug drehbaren Teil und aus einem zweiten mit einem Gewinde versehenen Teil, wobei das erste Teil und das zweite Teil relativ zueinander um die Längsachse des Schraubelements verdrehbar, jedoch über eine Verbindungsstelle aneinander axial haltbar sind sowie aus einer das vom ersten Teil auf das zweite Teil übertragbare Drehmoment beschränkenden Einrichtung besteht.

Schraubelemente, die der Befestigung einer Leitung an einem Gegenstück dienen, sei es an ein Verbindungsteil zu einer weiteren Leitung oder zu einem Anschluss an ein Gehäuse eines Gerätes oder an einer pneumatischen oder hydraulischen Einrichtung, sind in großer Vielfalt bekannt. Bei den Anschlüssen kann es sich um Eingänge oder Ausgänge handeln. Die Leitungen können aus Metall und/oder aus Kunststoff bestehen und können starr oder flexibel sein. Die Schraubelemente können die Form von hohlen Bolzen oder Schraubmuffen haben oder als Hülsenmuttern ausgebildet werden. Auch werden Schraubelemente zur Befestigung von elektrischen Leitungen an elektrischen Geräten verwendet. Solche Schraubelemente haben häufig die Form von hohlen Schraubbolzen, die ein ringförmiges Dicht- und/oder Klemmelement für die Leitung sowie die durch das Dichtelement hindurchgeführte Leitung umfassen. Die aus Kunststoff bestehenden Leitungen werden an ihren freien Enden häufig nach außen umgebördelt, um einen Flansch zu bilden, der zugleich als Dichtung wirkt. Das Schraubelement drückt mit seiner Stirnseite meistens gegen einen Stützring, der wiederum direkt oder über eine Dichtung gegen den Flansch drückt und diesen gegen die Bodenfläche einer Anschlussbohrung presst. Insbesondere bei Leitungen, die aus PTFE oder FEP bestehen, muss der Anpressdruck am Flansch in Grenzen gehalten werden, da sonst das Kunststoffmaterial in unerwünschter Weise zu fließen beginnt.

Insbesondere auf dem Gebiet der analytischen, präparativen oder industriellen Chromatographie und auf dem Gebiet der medizinischen Diagnostik und Laborgeräte im Allgemeinen werden häufig relativ dünne, aber teilweise im Betrieb unter hohem Druck stehende Schläuche aus Kunststoff mittels Schraubelementen aus Kunststoff an die entsprechenden Geräte, beispielsweise an HPLC- MPLC oder LPLC-Geräte bzw. Chromatographiesäulen angeschlossen. Dabei können eine erhebliche Zahl von Leitungen an ein Gerät angeschlossen werden. Im Regelfall werden die Schraubelemente mit der Hand, d.h. mit den Fingern festgezogen. Es kommt aber vor, dass die Zugänglichkeit der Schraubelemente aufgrund der beengten Platzverhältnisse schwierig ist. Dabei kann es durchaus vorkommen, dass entsprechende Schraubelemente nur immer über kleine Winkelbereiche gedreht werden können, und es kann erforderlich werden, ein Werkzeug anzuwenden, um die Schraubelemente ausreichend festzuziehen. Egal ob die Schraubelemente mit der Hand oder mit einem Werkzeug festgezogen werden, ist es angebracht, dafür Sorge zu tragen, dass die Schraubelemente ausreichend fest angezogen sind, jedoch nicht so fest, dass das Gewinde des Schraubelements, das häufig aus Kunststoff besteht, beschädigt wird oder so fest, dass die Abdichtung des Kunststoffschlauches nicht mehr gewährleistet ist, sei es durch Verformung oder Beschädigung des Schlauches und/oder einer vorgesehenen Dichtung.

Ein Schraubelement der eingangs genannten Art ist aus der DE 4 442 075 C1 bzw. aus der US 2007/0 254 744 A1, die den Oberbegriff des Anspruches 1 bildet, bekannt und kann als ein Schraubelement mit eingebauter Drehmomentbegrenzung aufgefasst werden. Die bekannten Ausführungen gemäß diesen Schriften sind in der Herstellung aufwändig, da relativ filigrane Strukturen erforderlich sind, die die verwendeten Spritzgusswerkzeuge verkomplizieren. Ferner sind die bekannten Ausführungen nicht wirklich kompakt.

Die FR 2 841 946 A1 zeigt ein Schraubelement zur Klemmverbindung elektrischer Leitungen, das aus einem ersten mit der Hand oder mit einem Werkzeug drehbaren Teil und aus einem zweiten mit einem Gewinde versehenen Teil besteht. Das erste Teil und das zweite Teil sind relativ zueinander um die Längsachse des Schraubelements verdrehbar und über eine Verbindungsstelle aneinander axial haltbar. Zudem ist eine das vom ersten Teil auf das zweite Teil übertragbare Drehmoment beschränkende Einrichtung vorgesehen, die Ratschennasen aufweist.

Die DE 25 18 563 A1 und die US 7 845 963 B2 sind Verbindungskupplungen für elektrische Leitungen, die Komponenten mit Ratschennasen und Federelemente aufweisen, die aber lediglich ein versehentliches Lösen verhindern sollen. Eine Drehmomentbegrenzung in Anzugsrichtung ist nicht vorgesehen.

Weiterer Stand der Technik ist in der US 2006/0 236 825 A1 offenbart.

Die Aufgabe der vorliegenden Erfindung liegt darin, eine Kombination aus einem Kunststoffschlauch (12) für Laborgeräte und einem Schraubelement der eingangs genannten Art vorzusehen, wobei das Schraubelement in der Herstellung nicht besonders aufwändig, jedoch kompakt ist und beispielsweise mindestens hauptsächlich in einem Spritzgussverfahren aus Kunststoff herstellbar ist und welches ein zuverlässiges Anziehen bei Gewährleistung des erforderlichen Drehmoments auch bei beengten Platzverhältnissen ermöglicht.

Zur Lösung dieser Aufgabe wird eine Kombination aus einem Kunststoffschlauch für Laborgeräte und einem Schraubelement gemäß Anspruch 1 vorgesehen.

Die Ratschennasen können mit Vorteil die Form von einander in einer Ringanordnung direkt oder mit Lücken folgenden Rampen aufweisen, wobei zwischen dem Ablaufende der einen Rampe und dem Anlaufende der dieser folgenden Rampe eine axiale Stufe vorliegt. Dabei bedeutet die Bezeichnung "axiale Stufe" nicht zwangsläufig, dass die entsprechende Fläche achsparallel ausgerichtet sein muss, stattdessen kann die axiale Stufe auch selbst durch eine Schrägfläche oder anderweitig (beispielsweise durch eine gekrümmte Fläche) gebildet werden. Die Zahl der Rampen kann je nach Bedarf gewählt werden. Mit nur einer Rampe liegt die genannte axiale Stufe zwischen dem Ablaufende der Rampe und ihrem Anlaufende, die Drehmomentbegrenzung ist allerdings hier nicht unbedingt ideal, da ein relativ, großer Drehwinkel erforderlich ist, bevor die Begrenzung zur Wirkung kommt, so dass die Gefahr besteht, dass das Schraubelement evtl. zu fest angezogen wird.

Mehrere Rampen werden deshalb bevorzugt, wobei die Zahl nicht unendlich groß sein sollte, da dann wieder filigrane Strukturen entstehen. Bis zu zwölf Rampen sind voraussichtlich ohne weiteres vertretbar.

Eine Auslegung des Schraubelements entsprechend der vorliegenden Lehre sorgt für die erwünschte Drehmomentbegrenzung durch in axiale Richtung arbeitende Kraft anstelle von in radialer Richtung wirkenden Kräften, wie bei den bekannten Ausführungen nach den oben genannten Druckschriften der Fall ist. Aus diesem Grund können erfindungsgemäße Schraubelemente im Vergleich zu den bekannten Schraubelementen der gleichen Gewindegröße deutlich kompakter im Sinne ihrer radialen Abmessungen gebaut werden. Ferner können die erfindungsgemäßen Schraubelemente durch die Vermeidung von filigranen und schwierig genau herzustellenden Formmerkmalen günstiger erzeugt werden. Das Federteil kann als einfaches Metallteil aus einem Blechmaterial ausgestanzt werden, was nicht nur einfach in der Herstellung ist, sondern es ermöglicht, die axial wirkenden Kräfte, die letztendlich das Drehmoment begrenzen, genau zu bestimmen, zumal Metallteile mit mechanischen Eigenschaften hergestellt werden können, die eine geringere Spreizung aufweisen als die von Kunststoffbauteilen.

Nach der Erfindung ist mindestens ein Mitnehmer vorgesehen, der dem Mitdrehen des Rampenteils mit dem ersten oder zweiten Teil dient.

Eine bevorzugte Auslegung des Rampenteils liegt darin, dieses als Federring auszubilden. Dabei erhält der Federring beispielsweise die Form eines mit Zacken versehenen Sicherungsringes und ist somit bestens für eine Massenanfertigung geeignet.

Dabei kann der mit dem ersten Teil oder mit dem zweiten Teil drehbare Federring mit Formmerkmalen ausgestattet werden, die mit komplementären Formmerkmalen des entsprechenden Teils in Eingriff stehen und als Mitnehmer wirken.

Formmerkmale des Rampenteils bzw. des Federrings können bevorzugt kostengünstig aus der Gruppe: axial gerichtete Öffnungen, axial gerichtete Bohrungen oder Stanzlöcher, radial nach innen gerichtete Nasen und radial nach außen gerichtete Nasen gewählt werden. Die komplementären Formmerkmale, die durch ein Spritzgussverfahren an dem mitdrehende Teil des Schraubelements herzustellen sind, werden dann aus der Gruppe: axial gerichtete der Form der Öffnungen, Bohrungen oder Stanzlöcher angepasste Pfosten, radial nach außen weisende Nuten an einem zylindrischen Abschnitt des den Rampenteil mitnehmenden Teils und radial nach innen weisende Nuten an einer Innenwand des den Rampenteil mitnehmenden Teils ausgewählt.

In einer bevorzugten Ausführungsform ist ein Federteil zwischen dem Rampenteil und dem ersten Teil oder zwischen dem Rampenteil und dem zweiten Teil vorgesehen. In dieser Ausführungsform wird also ein elastischeres Bauteil zwischen dem Rampenteil und z.B. dem zweiten Teil vorgesehen, um die erwünschte Drehmomentbegrenzung zu erzeugen. Das Federteil kann z.B. aus Metall und das Rampenteil z.B. aus einem Kunststoff, beispielsweise in einem Spritzgussverfahren, hergestellt werden. Somit kann das gewünschte Drehmoment genauer eingestellt und ein erfindungsgemäßes Schraubelement noch günstiger hergestellt werden.

Das Rampenteil wird dann mit den Formmerkmalen ausgestattet, die mit komplementären Formmerkmalen des ersten oder des zweiten Teils in Eingriff stehen und als Mitnehmer wirken.

Bevorzugt wird das Federteil aus der Gruppe bestehend aus einer Schraubenfeder, einer Tellerfeder, einer Spiralfeder, einer Bellevillefeder und einer Blattfeder ausgewählt.

Dabei ist die Fläche des Rampenteils, die an dem mitdrehenden Teil oder dem Federteil anliegt, plan, was ebenfalls eine preisgünstige Herstellung des Rampenteils ermöglicht.

In entsprechender Weise kann die Fläche des mitdrehenden Teils, an der das Rampenteil oder das Federteil anliegt, durch eine radiale Schulter des mitdrehenden Teils gebildet werden, welche ebenfalls einfach herzustellen ist.

Besonders günstig ist es, wenn die Ratschennasen an einem zweiten Ring ausgebildet sind, der mit dem jeweils anderen Teil drehfest oder über weitere Mitnehmer verbunden ist. Dabei kann der zweite Ring im Vergleich zu dem vorgenannten Federring relativ steif oder ebenfalls als Federring ausgebildet werden. Der Ring kann gegebenenfalls die gleiche Ausbildung aufweisen wie der erstgenannte Federring, was eine besonders rationelle Herstellung ermöglicht.

Die Lösung mit einem zweiten Ring hat den Vorteil, dass auch die entsprechenden Ratschennasen einfach und mit gut definierter Form hergestellt werden können.

Die Verbindungsstelle zwischen dem ersten Teil und dem zweiten Teil des Schraubelements kann vorteilhafterweise durch mindestens einen radialen Vorsprung an dem ersten Teil oder an dem zweiten Teil und mindestens eine radiale Vertiefung in dem jeweils anderem Teil gebildet werden.

Besonders günstig ist es, wenn der mindestens eine radiale Vorsprung durch eine Ringnase und die mindestens eine radiale Vertiefung durch eine Ringnut gebildet sind, da solche Merkmale spritzgusstechnisch einfach herzustellen sind.

Somit befasst sich die Erfindung mit einer Kombination aus einem Kunststoffschlauch für Laborgeräte und einem Schraubelement zum Befestigen des Kunststoffschlauchs an einem Gegenstück, wie einem Anschluss zu einer weiteren Leitung oder einem Geräteanschluss, wobei das Schraubelement aus einem ersten mit der Hand oder mit einem Werkzeug drehbaren Teil und aus einem zweiten mit einem Gewinde versehenen Teil besteht, wobei das erste Teil und das zweite Teil relativ zueinander um die Längsachse des Schraubelements verdrehbar, jedoch über eine Verbindungsstelle aneinander axial haltbar sind, mit dem besonderen Kennzeichen, dass das erste Teil und das zweite Teil an axial einander gegenüberliegenden Flächen je mit mindestens einer axial ansteigenden Rampe ausgestattet sind, und dass die Verbindungsstelle ausgelegt ist, um die axiale Haltekraft zwischen dem ersten Teil und dem zweiten Teil zur Beschränkung des zwischen diesen bei einer relativen Drehbewegung übertragbaren Drehmoments entweder zu beschränken oder abrupt ansteigen oder abfallen zu lassen.

Die oben erläuterten Beispiele haben den Vorteil, dass die Drehmomentbegrenzung beim Anziehen des Schraubelements wirksam ist, aber beim Lösen des Schraubelements nicht hinderlich ist. Dann stoßen die Federteile an die axialen Stufen zwischen den Ratschennasen und ermöglichen so eine einwandfreie Herausdrehung des Schraubelements.

Die durch die Erfindung ermöglichte Einhaltung eines vorgegebenen Drehmomentes stellt sicher, dass speziell bei PTFE- und FEP-Leitungen der Anpressdruck nicht so hoch wird, dass ein unerwünschtes Fließen des Schlauchmaterials eintritt. Ferner wird mittels der Drehmomentbegrenzung der Stützring und gegebenenfalls ein zwischen Stützring und Flansch oder sonst wo vorgesehener O-Ring gegen ein übermäßiges Zusammendrücken geschützt.

Die Erfindung wird nachfolgend anhand von Ausführungsbeispielen unter Bezugnahme auf die Zeichnungen näher erläutert, in denen zeigen:
- Fig. 1A und 1B: zwei perspektivische und auseinander gezogene Darstellungen eines erfindungsgemäßen Schraubelements mit einem Federring;
- Fig. 2A bis 2D: eine Draufsicht (Fig. 2A), eine Seitenansicht (Fig. 2B), eine Schnittzeichnung (Fig. 2C) entsprechend der Schnittebene A-A der Fig. 2A und eine perspektivische Darstellung (Fig. 2D) des Federrings der Ausführung gemäß Fig. 1A und 1B;
- Fig. 3A bis 3D: eine Draufsicht (Fig. 3A), eine Seitenansicht (Fig. 3B), eine Schnittzeichnung (Fig. 3C) entsprechend der Schnittebene A-A der Fig. 3A und eine perspektivische Darstellung (Fig. 3D) des einen Teils (der Schraubenkappe) der Ausführung gemäß Fig. 1A und 1B;
- Fig. 4A bis 4D: eine Draufsicht (Fig. 4A), eine Seitenansicht (Fig. 4B), eine Schnittzeichnung (Fig. 4C) entsprechend der Schnittebene A-A der Fig. 4A und eine perspektivische Darstellung (Fig. 4D) des zusammengebauten Schraubelements der Ausführung gemäß Fig. 1A und 1B;
- Fig. 5A bis 5B und 6A bis 6D: Darstellungen entsprechend denen der Fig. 1A und 1B und 3A bis 3D, jedoch von einem erfindungsgemäßen Schraubelement mit zwei Federringen, wobei die Schnittzeichnung gemäß Fig. 6C einem Schnitt entsprechend der Ebene A-A der Fig. 6B entspricht;
- Fig. 7A und 7B: Darstellungen eines Schraubelements in zusammengebauter Form stellvertretend für die oben erläuterten Schraubelemente, jedoch mit einer anderen Kopfform, d.h. mit einer Formgebung des Kappenteils des Schraubelements der Fig. 1A und 1B bzw. der Fig. 5A und 5B; und
- Fig. 8A und 8B: eine weitere Ausführungsform eines erfindungsgemäßen Schraubelements mit einem Federring in zwei perspektivischen und auseinander gezogenen Darstellungen.

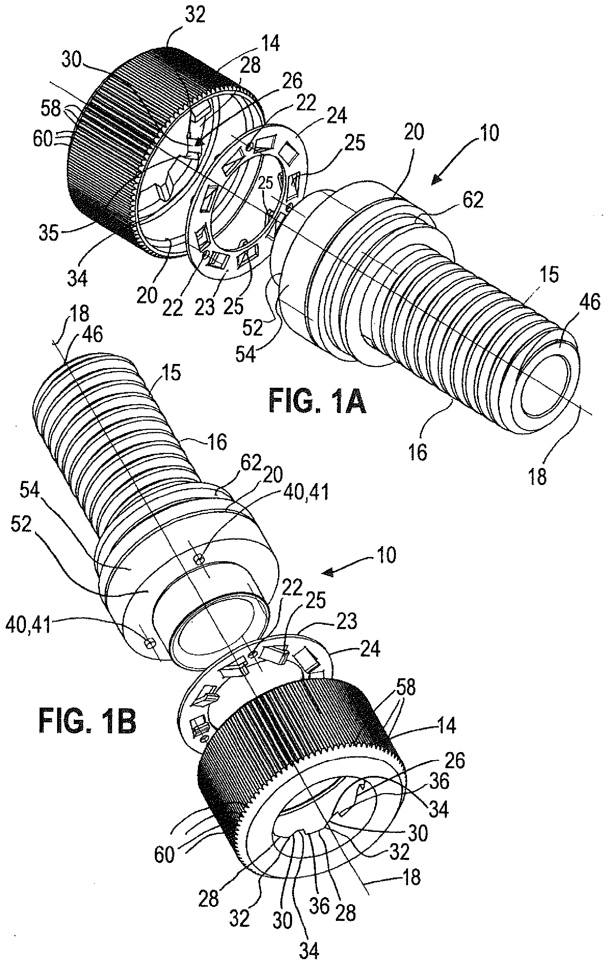

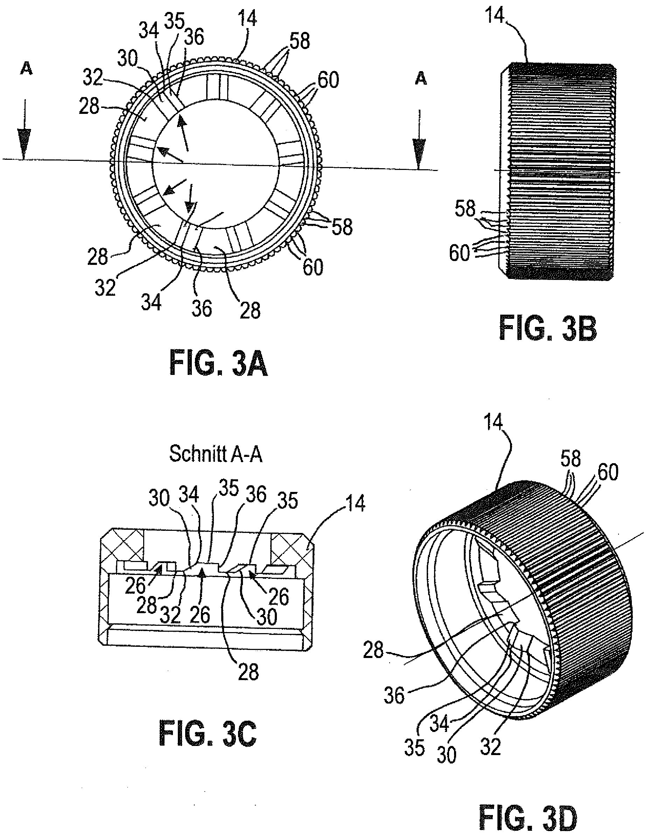

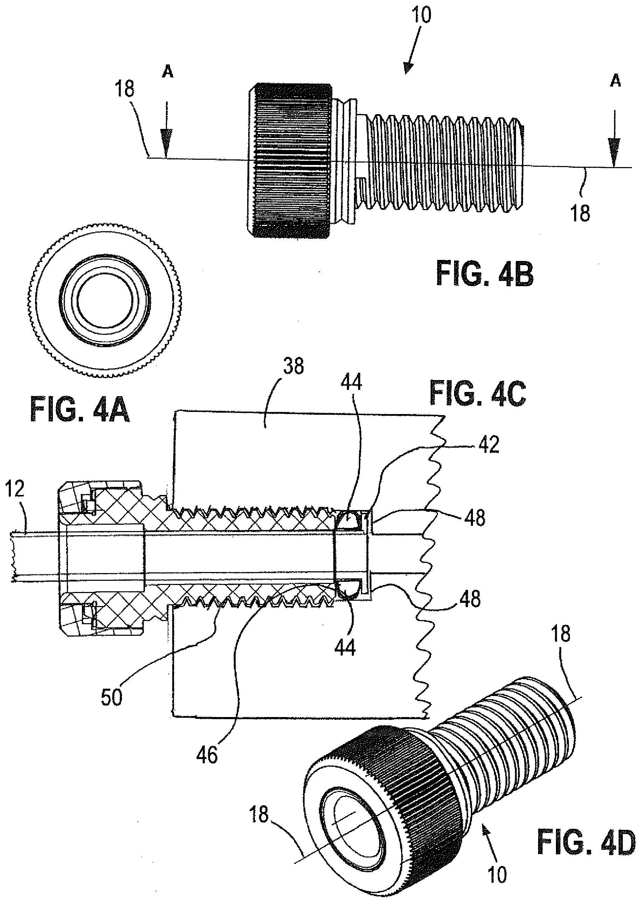

Die Fig. 1A und 1B, 2A bis 2D, 3A bis 3D und 4A bis 4D zeigen jeweils ein Schraubelement 10 zum Befestigen eines Gegenstands in Form einer Kunststoffleitung 12 (Fig. 4C an einem Gegenstück 38 (Fig. 4C), wie einem Anschluss zu einer weiteren Leitung oder einem Geräteanschluss, wobei das Schraubelement 10 aus einem ersten mit der Hand oder mit einem Werkzeug drehbaren Teil 14 und aus einem zweiten mit einem Gewinde 15 versehenen Teil 16 besteht. Das erste Teil 14 und das zweite Teil 16 sind relativ zueinander um die Längsachse 18 des Schraubelements 10 verdrehbar, jedoch über eine Verbindungsstelle 20 aneinander axial haltbar. Ferner besteht das Schraubelement 10 aus einer das vom ersten Teil 14 auf das zweite Teil 16 übertragbare Drehmoment beschränkenden Einrichtung, die mindestens ein Federteil 24 umfasst. In diesem Beispiel ist der Federring 24 mit dem zweiten, das Gewinde 15 tragenden Teil 16 drehbar, d.h. an diesem drehfest angebracht. Der Federring 24 ist mit Federzungen 25 versehen, die schräg zur Ebene des Federringes verlaufen und in einer Richtung parallel zur Längsachse 18 des Schraubelements, d.h. axial, federn können, wie später näher erläutert wird.

Der Federring 24 bzw. dessen Federzungen 25 arbeitet bzw. arbeiten mit Ratschennasen 26 des jeweils anderen Teils 14 zusammen. Der vorliegende Federring weist drei Anschlusspunkte oder Formmerkmale 22 auf, mittels denen er drehfest mit dem zweiten, das Gewinde 15 tragenden Teil 16 verbunden wird.

Die Ratschennasen 26 weisen hier die Form von einander in einer Ringanordnung mit Lücken 28 folgenden Rampen 30 auf, wobei zwischen dem Ablaufende 32 der einen Rampe 30 und dem Anlaufende 34 der dieser folgenden Rampe 30 eine axiale Stufe 36 vorliegt. Die Zahl der Rampen 30 beträgt hier neun, kann aber je nach Bedarf gewählt werden. Mit nur einer Rampe 30 liegt die genannte axiale Stufe 36 zwischen dem Ablaufende 32 der Rampe 30 und ihrem Anlaufende 34. Bei nur einer Rampe 30 wäre die Drehmomentbegrenzung allerdings nicht unbedingt ideal, da ein relativ großer Drehwinkel erforderlich wäre, bevor die Begrenzung zur Wirkung käme, so dass die Gefahr bestünde, dass das Schraubelement 10 eventuell zu fest angezogen wird.

Mehrere Rampen 30 werden deshalb bevorzugt, wobei die Zahl nicht unendlich groß sein sollte, da dann wieder filigrane Strukturen entstehen. Bis zu zwölf Rampen 30 sind voraussichtlich ohne weiteres vertretbar.

Um sicherzustellen, dass der Federring mit dem zweiten, das Gewinde 15 tragende Teil 16 dreht, werden hier drei Mitnehmer 40 in Form von zylindrischen Pfosten oder Stiften 41 vorgesehen, welche mit den Formmerkmalen 22 kooperieren und dem Mitdrehen des Federringes 24 mit dem zweiten Teil 16 dienen. Es müssen nicht unbedingt drei Mitnehmer vorgesehen werden. Ein Mitnehmer wäre unter Umständen durchaus ausreichend, zwei wären besser und mehr als drei durchaus möglich aber normalerweise unnötig.

Die Stifte oder Pfosten 41 sind bei der Herstellung des zweiten Teils 16 durch ein Spritzgussverfahren gleichzeitig ausgebildet, so dass ein einheitliches, d.h. einstückiges Teil vorliegt. Denkbar wäre es auch, getrennte Stifte vorzusehen, die in Bohrungen des zweiten Teils eingesetzt werden.

Die Ratschennasen 26 können mit Vorteil die Form von einander in einer Ringanordnung direkt oder mit Lücken folgenden Rampen 30 aufweisen, wobei zwischen dem Ablaufende 32 der einen Rampe 30 und dem Anlaufende 34 der dieser folgenden Rampe 30 eine axiale Stufe 36 vorliegt. Dabei kann die Zahl der Rampen 30 je nach Bedürfnis gewählt werden. Diese Zahl entspricht auch der Zahl der Federzungen 25, die den gleichen Winkelabstand und zumindest im Wesentlichen die gleichen radialen Abmessungen wie die Rampen 30 aufweisen, jedoch sind die Federzungen 25 etwas kleiner in der radialen Richtung wie die Rampen 30.

Mit nur einer Rampe 30 liegt die genannte axiale Stufe 36 zwischen dem Ablaufende 32 der Rampe 30 und ihrem Anlaufende 34, die Drehmomentbegrenzung ist allerdings hier nicht unbedingt ideal, da ein relativ großer Drehwinkel erforderlich ist, bevor die Begrenzung zur Wirkung kommt, so dass die Gefahr besteht, dass das Schraubelement 10 eventuell zu fest angezogen wird.

Deshalb werden mehrere Rampen 30 bevorzugt, wobei die Zahl nicht unendlich groß sein sollte, da dann wieder filigrane Strukturen entstehen.

Bis zu zwölf Rampen 30 sind voraussichtlich ohne weiteres und ohne Einschränkung vertretbar.

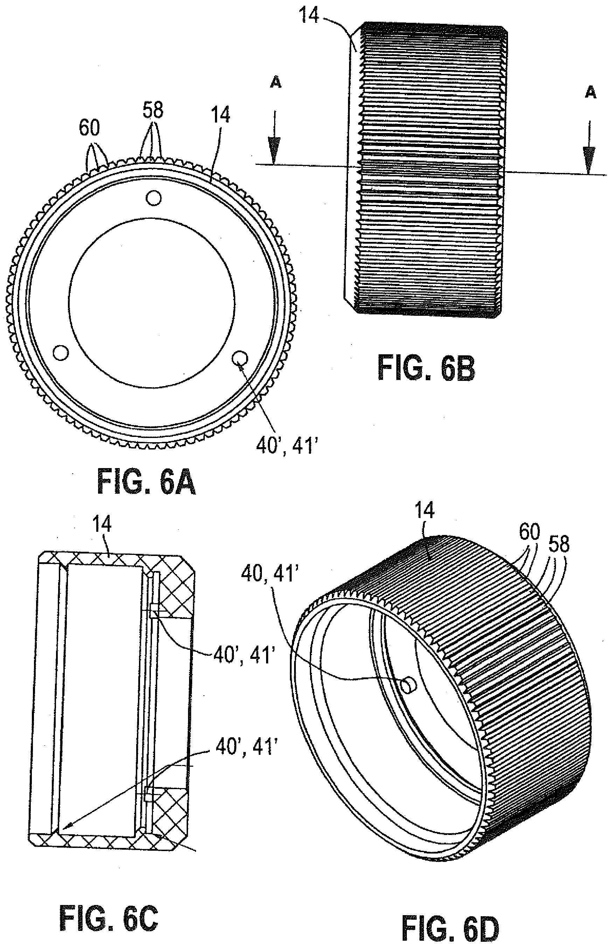

Es wäre allerdings durchaus auch möglich, die Rampen bzw. Ratschennasen 30 auf dem zweiten, das Gewinde 15 tragende Teil 16 vorzusehen und die Mitnehmer 40 in dem ersten Teil 14, d.h. in der Kappe, anzuordnen, wie in der Fig. 6A gezeigt ist.

Wie aus dem oben Gesagten ersichtlich, ist das Federteil 24 vorzugsweise als Federring ausgebildet, könnte aber anderweitig ausgebildet werden beispielsweise durch einzelne Blattfedern oder umfangsmäßig verteilt angeordnete Haarnadelfedern.

Wie bereits angesprochen ist der mit dem zweiten Teil 16 drehbare Federring 24 mit Formmerkmalen 22 ausgestattet, die mit komplementären Formmerkmalen 41 des entsprechenden Teils 16 in Eingriff stehen, die als Mitnehmer 40 wirken.

Es stehen viel Alternativen für die Mitnehmer 40 und die damit zusammenarbeitenden Formmerkmale 22 des Federringes 24 zur Verfügung.

In der gezeigten Ausführungsform sind die Formmerkmale 22 des Federrings 24 axial gerichtete Öffnungen in der Form von kreisrunden, axial gerichteten Stanzlöchern und diese arbeiten mit zylindrischen, axial gerichteten Pfosten 41 am zweiten Teil 16 zusammen.

Die Stanzlöcher 22 könnten aber auch Bohrungen sein, die beispielsweise mit einem Bohrer (nicht gezeigt) oder mit einem Laser (nicht gezeigt) hergestellt werden. Es ist auch nicht zwingend erforderlich, dass die Querschnittsform der Mitnehmer bzw. der Stifte 41 der Form der Stanzlöcher 22 oder Bohrungen 22 angepasst sind, sie müssen lediglich in die entsprechenden Stanzlöcher 22 bzw. Bohrungen 22 hineinpassen. Es ist auch nicht erforderlich, dass die Stanzlöcher 22 oder anderweitige Öffnungen 22 kreisrund sind. Auch andere Formgebungen wie polygonale Querschnittsformen sind möglich.

Eine weitere Möglichkeit besteht darin, die Formmerkmale 22 durch radial nach innen gerichtete Nasen des Federringes 24 zu realisieren, die in radial nach außen weisende Vertiefungen in einem mittig angeordnetem Vorsprung (nicht gezeigt) des das Gewinde 15 tragenden Teils 16 (oder der "Kappe" 14) eingreifen.

Auch kämen radial nach außen gerichtete Nasen des Federringes 24 in Frage, die in radial nach innen weisende Vertiefungen in einer Innenwand eines den Federring 24 mitnehmenden Teils angeordnet sind. Eine solche Innenwand könnte durch die Innenwand der "Kappe" 14 oder durch einen hohlen Vorsprung (nicht gezeigt) des das Gewinde 15 tragenden Teils 16 gebildet werden.

Ferner wäre eine umgekehrte Anordnung möglich, bei der Nasen an der Innenwand der "Kappe" 14 (nicht gezeigt) oder an einem hohlen Vorsprung (nicht gezeigt) des das Gewinde 15 tragenden Teils 16 in (ebenfalls nicht gezeigten) Nuten oder Vertiefungen des Federringes 24 eingreifen.

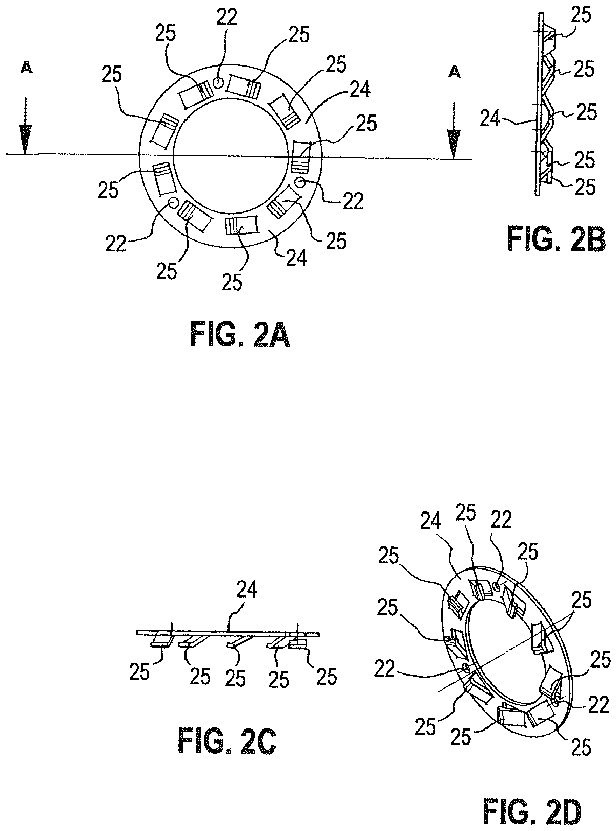

Wie insbesondere aus den Fig. 2A bis 2D hervorgeht, ist die Fläche 23 des Federrings 24, die an dem mitdrehenden Teil anliegt, plan ausgeführt. Dementsprechend ist die Fläche des mitdrehenden Teils 16, an der der Federring anliegt, d.h. in diesem Beispiel ist die Fläche 52 der Stirnseite 54 des das Gewinde 15 tragenden Teils 16 durch eine von einer radialen Schulter definierten planaren Fläche des mitdrehenden Teils 16 gebildet.

Wie aus den Fig. 4A bis 4D hervorgeht, befindet sich im zusammengebautem Zustand des Schraubelements 10 die radial nach innen gerichtete Ringnase an der Innenwand der "Kappe" 14 in Eingriff mit der radial nach außen gerichteten Rille des das Gewinde 15 tragenden Teils 16, wodurch der Federring 24 an der genannten radialen Schulter 52 und in Eingriff mit den Ratschennasen 30 gehalten wird.

Die Leitung 12 besteht aus Kunststoff und ist am dem Schraubelement 10 zugewandten Ende mit einem Flansch 42 versehen, der üblicherweise durch Umformen bzw. Verpressung des abgeschnittenen Endes der Leitung 12 im beheizten Zustand erzeugt wird. Bei dem Anschrauben des Schraubelements 10 an einen Anschluss 38 eines Gehäuses oder an ein Verbindungstück wird der Flansch 42 zwischen einem Stützring 44 an der Stirnseite am freien Ende 46 des Schraubelements 10 und einer Schulter 48 am Ende einer Gewindebohrung 50 des Anschlusses 38 gefangen.

Wenn das Schraubelement 10 angezogen wird, sei es mit der Hand oder mit einem Werkzeug, steigt das Drehmoment mit zunehmendem Eingriff des freien Endes 46 des das Gewinde 15 tragenden Teils 16 mit dem Stützring 44 und dem Flansch 42 am Ende der Leitung 12. Sobald die freie Stirnseite 52 des Flansches 42 an der Schulter 48 des entsprechenden Anschlusses anliegt, fangen die Rampen 30 an, über die Federzungen 25 des Federringes 24 zu gleiten und pressen diese immer mehr in Richtung eines abgeflachten Zustands in der Ebene der Fläche 54. Dabei liegen die geneigten Flächen der Rampen 30 zumindest in etwa parallel zu den Federzungen 25 im entspannten Zustand des Federringes 24.

Sobald der abgeflachte Zustand der Federzungen 25 erreicht ist, schnappen die freien Enden 56 der Federzungen 25 über die axialen Stufen 36, die axial wirkende Federkraft lässt nach, und die "Kappe" 14 kann gegenüber dem das Gewinde 15 tragende Teil 16 weitergedreht werden mit einem kaum spürbaren Widerstand, wenn die Bodenflächen der Lücken 28 über die freien Enden 56 der Federzungen 25 hinweg gleiten. Zwischen dem Ablaufende jeder Rampe 30 und der zugeordneten axialen Stufe 36 befindet sich in diesem Beispiel eine planare Fläche 35, die in einer radialen Ebene zur Längsachse 18 liegt. Solch planare Flächen 35 können auch fortgelassen werden erleichtern aber den Zusammenbau des Schraubelements 10. Während die freien Enden der Federzungen 25 über die planare Flächen 35 gleiten bleibt das Drehmoment zumindest im Wesentlichen konstant. Danach, bei einem Weiterdrehen der "Kappe" 14, springen die Federzungen in ihre geneigte Position zurück. Das Drehmoment fällt abrupt ab und bleibt auf einem niedrigen Niveau bis die Federzungen 25 nach einem weiteren Drehwinkel entsprechend der Länge der Lücken von den Rampen 30 wieder komprimiert werden. Das aufgewendete Drehmoment steigt erneut an, bis es das maximale Drehmoment wieder erreicht, bei dem die freien Enden 56 der Federzungen 25 wieder ausgerichtet mit den axialen Stufen 36 liegen. Dann fällt das Drehmoment wieder ab.

Dieses Spiel wiederholt sich, solange an der Kappe weitergedreht wird. Das Gewinde 15 tragende Teil 16 des Schraubelements 10 kann aber nicht weitergedreht, d.h. nicht fester gezogen werden, und das maximale Drehmoment ist deshalb begrenzt, und zwar auf den technisch erwünschten Wert, welcher von der Festigkeit des Materials und der Gewindeform und -größe abhängt und durch die Wahl der Anzahl der Federzungen 25, die Winkel der Rampen 30, die Festigkeit des Materials des Federringes 24 und die Abmessungen der Federzungen 25 bestimmt wird. Üblicherweise erfolgt auch ein Click-Geräusch und eine spürbare Vibration jedes Mal, wenn die Federzungen 25 an den Stellen der axialen Stufen 36 entspannen, was zusammen mit dem zyklisch ansteigenden Drehmoment vom Anwender als Zeichen, dass das maximale Drehmoment erreicht ist, wahrgenommen wird. Da das Drehmoment begrenzt ist, kann das Schraubelement nicht zu fest angezogen werden.

Wird, wie oben angedeutet, eine umgekehrte Anordnung gewählt, d.h. die die Ratschennasen bildenden Rampen 30 am das Gewinde 15 tragenden Teil 16 des Schraubelements und die Mitnehmer 40 an der "Kappe" 14, so erfolgt die Drehmomentbegrenzung analog zu dem oben Gesagten.

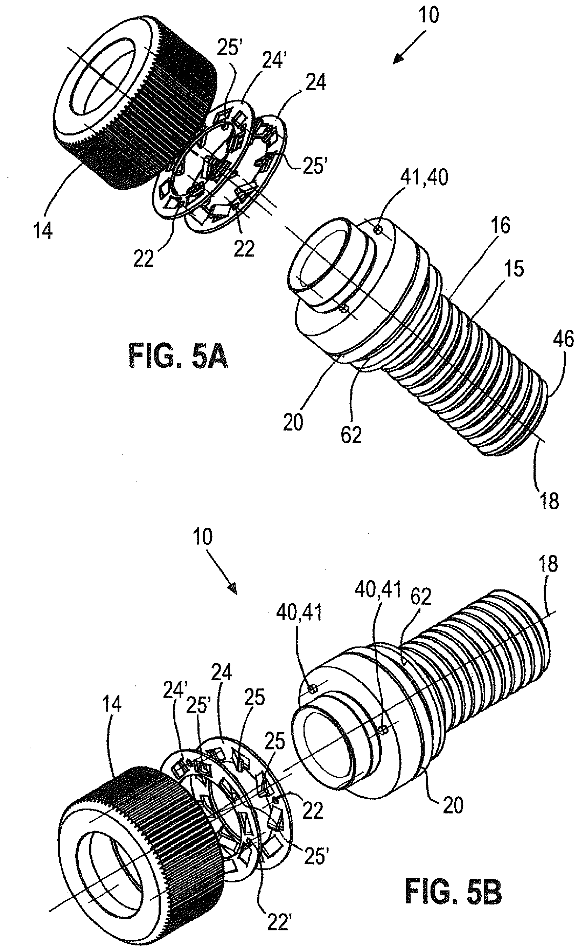

Eine weitere Ausführung des erfindungsgemäßen Schraubelements 10 wird nunmehr anhand der Fig. 5A und 5B sowie 6A bis 6D beschrieben. In diesen Figuren werden die gleichen Bezugszeichen für entsprechende Teile oder Teile mit entsprechender Funktion wie bisher verwendet und es versteht sich, dass das oben Beschriebene auch für diese Ausführungsform wie auch für etwaige weitere Ausführungsformen gilt. Nur abweichende Teile oder Konzepte werden näher beschrieben.

Bei der Ausführungsform gemäß Fig. 5A und 5B kommen zwei Federringe 24 und 24' zur Anwendung, wobei die Federringe 24 wie bisher über Mitnehmer 40 mit dem, das Gewinde 15 tragende Teil 16 gekoppelt ist, während der Federring 24' über weitere Mitnehmer 40' mit der "Kappe" 14 mitgedreht wird. Die Federzungen 25' des Federringes 24', der in diesem Beispiel identisch ist mit dem Federring 24, der wiederum dem Federring 24 der Fig. 2A bis 2D entspricht, bilden in diesem Beispiel die Rampen 30, d.h. die Ratschennasen, so dass es hier nicht erforderlich ist - im ersten Beispiel die Rampen 30 - in der gleichen Spritzgussform auszubilden wie die "Kappe" selbst. Aus diesem Grunde weist die "Kappe" 14 in diesem Beispiel eine planare Fläche entsprechend der planaren Fläche der bisherigen Ausführungsform auf. Dies ist nicht nur vorteilhaft in dem Sinne, dass die Spritzgussform vereinfacht wird und noch weniger filigrane Strukturen aufweist, sondern es ist auch einfacher, die technischen Eigenschaften der Schraube in Bezug auf die Begrenzung des Drehmoments und das Gleiten der Federzungen 25' des Federringes 24' über die Federzungen 25' des Federringes 24' genauer vorzugeben, da Federstahl genauer einzuhaltende Eigenschaften aufweist.

Mit anderen Worten werden bei diesem Beispiel die Ratschennasen an dem zweiten Ring 24 ausgebildet, der mit dem Teil 14 drehfest verbunden ist, beispielsweise über entsprechende Mitnehmer 40'.

Es ist allerdings nicht zwingend erforderlich, dass der zweite Ring 24' ebenfalls als Federring ausgebildet ist, und schon gar nicht, dass er die identische Ausbildung aufweist wie der erstgenannte Federring 24. Zum Beispiel könnte der Ring 24' als steifer, im Wesentlichen nicht federnder Ring ausgebildet werden oder er könnte eine andere Steifigkeit aufweisen wie der Federring 24.

Auch bei dieser Ausführungsform ist die Verbindungsstelle zwischen der "Kappe" 14 und dem das Gewinde 15 tragende Teil durch mindestens einen radialen Vorsprung an dem ersten Teil 14 (oder an dem zweiten Teil 16) und mindestens eine radiale Ringvertiefung in dem jeweils anderem Teil 16 bzw. 14 gebildet.

Der radiale Vorsprung ist in diesem Beispiel, wie auch im ersten Beispiel, vorzugsweise durch eine Ringnase und die mindestens eine radiale Vertiefung durch eine Ringnut gebildet. Andere Ausbildungen wären allerdings auch möglich beispielsweise könnten mehrere umfangsmäßig verteilte radiale Vorsprünge in eine Ringvertiefung eingreifen.

Die Fig. 6A und 6B zeigen ein Schraubelement, das denen der bisherigen Beispiele entspricht, außer dass die "Kappe" 14 anstelle von feinen Längsrippen 58 und Längsnuten 60 mit ausgeprägten Längsrippen und Längsnuten 60 an der Außenseite versehen ist. Die feinen Längsrippen 58 und Längsnuten 60 eignen sich für ein manuelles Festziehen des Schraubelements 10, während die ausgeprägteren Längsrippen 58 und Längsnuten 60 für die Anwendung eines Werkzeugs (nicht gezeigt) zum Festziehen des Schraubelements 10 besser geeignet sind. Die Außenform der Kappe 14 kann allerdings auch anders realisiert werden, beispielsweise als Außensechskant.

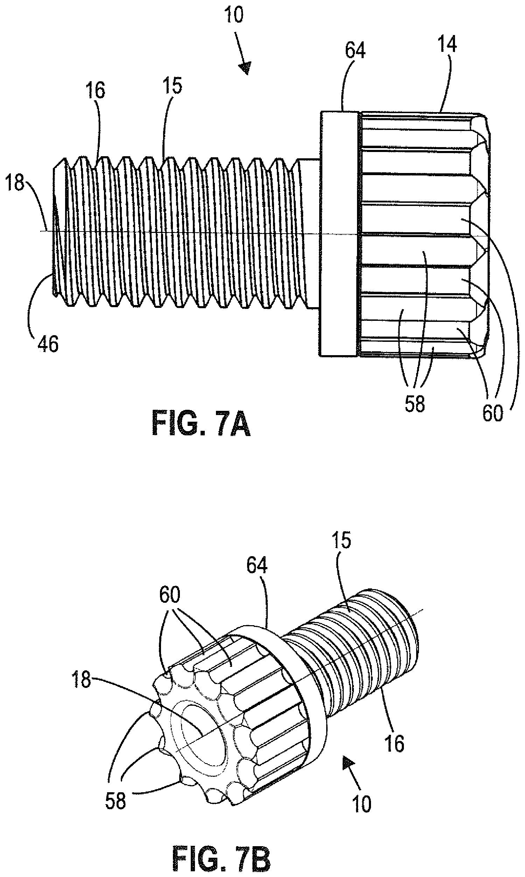

Das Bezugszeichen 62 deutet auf eine Ringnut 62 oder Rille 62, die zur Aufnahme eines farbigen an sich bekannten Kodierrings 64 vorgesehen ist, welcher in den Fig. 7A und 7B gezeigt, und in der Ringnut 62 bzw. auf einer Ringschulter des Schraubelements 10 auf der dem Gewinde 15 zugewandten Seite des Kopfes des Schraubelements 10 sitzt.

Die vorliegenden Beispiele wurden anhand eines Schraubelements 10 in der Form eines hohlen Bolzenelements 10 beschrieben. Die Erfindung könnte aber auch mit einer entsprechenden Hülsenmutter verwirklicht werden. Bei einer Hülsenmutter wird das erste Teil 14 durch eine kappe und das zweite, das Gewinde tragende Teil 16 durch ein hohles mit Innengewinde versehenen Bauteil gebildet, wobei ein Federring und Ratschennasen wie bisher beschrieben zwischen dem ersten Teil 14 und dem zweiten Teil 16 wirken.

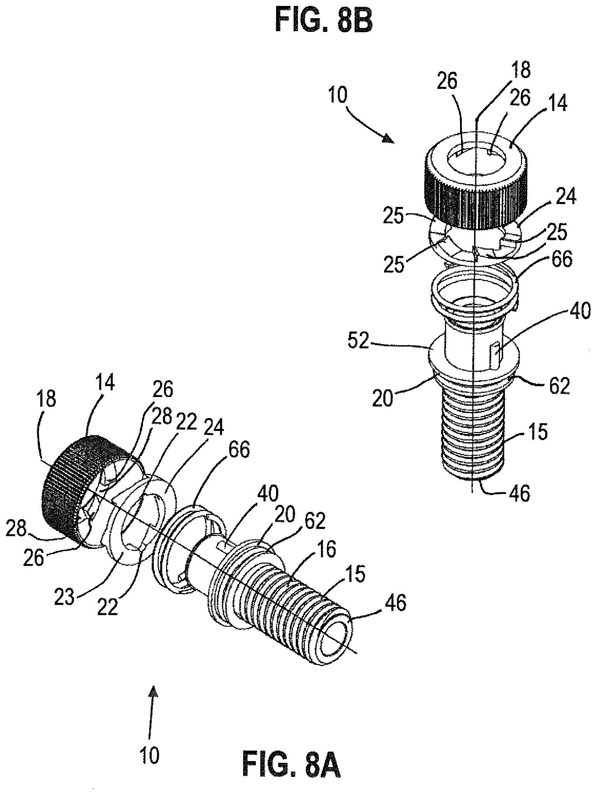

Die Fig. 8A und 8B zeigen ebenfalls ein Schraubelement 10 zum Befestigen einer Kunststoffleitung 12, an einen Anschluss zu einer weiteren Leitung oder an einen Geräteanschluss, wobei das Schraubelement 10 aus einem ersten mit der Hand oder mit einem Werkzeug drehbaren Teil 14 und aus einem zweiten mit einem Gewinde 15 versehenen Teil 16 besteht. Das erste Teil 14 und das zweite Teil 16 sind relativ zueinander um die Längsachse 18 des Schraubelements 10 verdrehbar, jedoch über eine Verbindungsstelle 20 aneinander axial haltbar. In diesen Figuren werden die gleichen Bezugszeichen für entsprechende Teile oder Teile mit entsprechender Funktion wie bisher verwendet und es versteht sich, dass das oben Beschriebene auch für diese Ausführungsform wie auch für etwaige weitere Ausführungsformen gilt. Nur abweichende Teile oder Konzepte werden näher beschrieben.

Das Schraubelement 10 der Fig. 8A und 8B besteht ferner aus einer das vom ersten Teil 14 auf das zweite Teil 16 übertragbare Drehmoment beschränkenden Einrichtung, die mindestens ein Federteil 66 umfasst. In diesem Beispiel ist eine Schraubenfeder 66 zwischen dem Rampenteil 24 und dem zweiten, das Gewinde 15 tragenden Teil 16 drehbar angeordnet. Das Rampenteil ist mittels der Mitnehmer 40 drehfest mit dem zweiten Teil 16 verbunden.

Das Rampenteil 24 ist analog zu dem Federteil 24 der Figuren 1A und 1B mit Rampen 25 versehen, die schräg zur Ebene des Federringes verlaufen und in einer Richtung parallel zur Längsachse 18 des Schraubelements, d.h. axial, mittels des Federteils 66 federn können. Das Rampenteil 24 der Fig. 8A und 8B ist also im Vergleich zu den vorhergehenden Figuren nicht als elastisches Bauteil ausgelegt, sondern als vergleichsweise steifes Bauteil, z.B. aus einem Kunststoffbauteil, welches in einem Spritzgussverfahren hergestellt wird, das sich unter den hier zu erwartenden Kräften zumindest im Wesentlichen nicht verformt. Um dennoch die erforderliche relative Bewegung zwischen dem Rampenteil 24 und dem am ersten oder am zweiten Teil 14, 16 des Schraubelements 10 vorgesehenen Ratschennasen 26 zu ermöglichen, kommt in diesem Beispiel eine Schraubenfeder 66 zum Einsatz.

Solch ein Federteil 66 kann, wie dem Fachmann bekannt, auch aus der Gruppe bestehend aus einer Tellerfeder, einer Spiralfeder, einer Bellevillefeder und einer Blattfeder ausgewählt werden.

### Bezugszeichenliste:

- 10: Schraubelement
- 12: Leitung
- 14: Teil
- 15: Gewinde
- 16: Teil
- 18: Längsachse
- 20: Verbindungsstelle
- 22: Formmerkmal, Anschlusspunkt
- 23: Fläche
- 24, 24': Federteil
- 25, 25': Federzunge
- 26: Ratschennase
- 28: Lücken
- 30: Rampe
- 32: Ablaufende
- 34: Anlaufende
- 35: Fläche
- 36: Stufe
- 38: Anschluss
- 40, 40': Mitnehmer
- 41: Stift
- 42: Flansch
- 44: Stützring
- 46: freien Ende
- 48: Schulter
- 50: Gewindebohrung
- 52: Stirnseite
- 54: Fläche
- 56: freien Ende
- 58: Längsrippe
- 60: Längsnut
- 62: Ringnut
- 64: Kodierring
- 66: Federteil

## Patentansprüche

1. Kombination aus einem Kunststoffschlauch (12) für Laborgeräte und einem Schraubelement (10), wobei das Schraubelement (10) mit einem Gewinde (15) zur Befestigung des Kunststoffschlauchs (12) an einem ein dem genannten Gewinde (15) komplementäres Gewinde aufweisenden Gegenstück, wie einem Anschluss zu einer weiteren Leitung oder einem Geräteanschluss versehen ist, wobei das Schraubelement (10) aus einem ersten mit der Hand oder mit einem Werkzeug drehbaren Teil (14) und aus einem zweiten mit dem Gewinde (15) versehenen Teil (16) besteht, wobei das erste Teil (14) und das zweite Teil (16) relativ zueinander um die Längsachse (18) des Schraubelements (10) verdrehbar, jedoch über eine Verbindungsstelle (20) aneinander axial haltbar sind, sowie aus einer das vom ersten Teil auf das zweite Teil übertragbare Drehmoment beschränkenden Einrichtung (24, 26) besteht, die Ratschennasen (26) aufweist, wobei das Schraubelement (10) ein zuverlässiges Anziehen bei Gewährleistung des erforderlichen Drehmoments ermöglicht, wobei das Schraubelement (10) die Form eines hohlen Bolzens hat oder als Hülsenmutter ausgebildet ist,
**dadurch gekennzeichnet,**
**dass** die das Drehmoment beschränkende Einrichtung mindestens ein Rampenteil (24; 24') umfasst, das mit dem ersten Teil (14) oder mit dem zweiten Teil (16) drehbar ist, in einer Richtung parallel zur Längsachse (18) des Schraubelements (10) gegen Federvorspannung beweglich ist und mit Ratschennasen (26) des jeweils anderen Teils zusammenarbeitet, und
**dass** mindestens ein Mitnehmer (40) vorgesehen ist, der dem Mitdrehen des Rampenteils (24; 24') mit dem ersten (14) oder zweiten Teil (16) dient.

2. Kombination nach Anspruch 1,
**dadurch gekennzeichnet, dass** der mit dem ersten Teil (14) oder mit dem zweiten Teil (16) drehbare Rampenteil (24; 24') mit Formmerkmalen (25; 25') ausgestattet ist, die mit komplementären Formmerkmalen (26) des entsprechenden Teils in Eingriff stehen und als Mitnehmer wirken.

3. Kombination nach Anspruch 2,
**dadurch gekennzeichnet, dass** die Formmerkmale (25; 25') des Rampenteils aus der Gruppe: axial gerichtete Öffnungen, axial gerichtete Bohrungen oder Stanzlöcher, radial nach innen gerichtete Nasen und radial nach außen gerichtete Nasen gewählt sind, und die komplementären Formmerkmale (26) aus der Gruppe: axial gerichtete der Form der Öffnungen, Bohrungen oder Stanzlöcher angepasste Pfosten, radial nach außen weisende Nuten an einem zylindrischen Abschnitt des den Federring mitnehmenden Teils und radial nach innen weisende Nuten an einer Innenwand des den Federring mitnehmenden Teils ausgewählt sind.

4. Kombination nach einem der vorhergehenden Ansprüche, **dadurch gekennzeichnet, dass** die Verbindungsstelle (20) durch mindestens einen radialen Vorsprung an dem ersten Teil (14) oder an dem zweiten Teil (16) und mindestens eine radiale Vertiefung in dem jeweils anderem Teil gebildet ist.

5. Kombination nach Anspruch 4,
**dadurch gekennzeichnet, dass** der mindestens eine radiale Vorsprung durch eine Ringnase und die mindestens eine radiale Vertiefung durch eine Ringnut gebildet sind.

6. Kombination nach einem der vorhergehenden Ansprüche,
**dadurch gekennzeichnet, dass** ein Federteil (66) zwischen dem Rampenteil (24) und dem ersten Teil (14) oder zwischen dem Rampenteil (24) und dem zweiten Teil (16) vorgesehen ist.

7. Kombination nach Anspruch 6,
**dadurch gekennzeichnet, dass** das Federteil (66) aus der Gruppe bestehend aus einer Schraubenfeder, einer Tellerfeder, einer Spiralfeder, einer Bellevillefeder und einer Blattfeder ausgewählt ist.

8. Kombination nach Anspruch 1,
**dadurch gekennzeichnet, dass** das Rampenteil (24; 24') als Federring ausgebildet ist.

9. Kombination nach einem der vorhergehenden Ansprüche,
**dadurch gekennzeichnet, dass** die Fläche des Rampenteils (24; 24'), die an dem mitdrehenden Teil (16; 14) oder dem Federteil (66) anliegt, plan ist.

10. Kombination nach Anspruch 5,
**dadurch gekennzeichnet, dass** die Fläche des mitdrehenden Teils (14; 16), an der der Rampenteil (24; 24') oder der Federteil (66) anliegt, durch eine radiale Schulter des mitdrehenden Teils (14; 16) gebildet ist.

11. Kombination nach einem der vorhergehenden Ansprüche, **dadurch gekennzeichnet, dass** die Ratschennasen (26) an einem zweiten Ring ausgebildet sind, der mit dem jeweils anderen Teil (14; 16) drehfest oder über weitere Mitnehmer verbunden ist.

12. Kombination nach Anspruch 11,
**dadurch gekennzeichnet, dass** der zweite Ring (24') ebenfalls als Federring (24) ausgebildet ist und gegebenenfalls die gleiche Ausbildung aufweist wie der erstgenannte Federring (24).

## Claims

1. A combination of a plastic hose (12) for laboratory devices and a screw element (10), wherein the screw element (10) is provided with a thread (15) for fastening the plastic hose (12) to a counter-piece having a thread complementary to said thread (15), such as a connector to a further line or a device connection, wherein the screw element (10) is composed of a first part (14) rotatable by hand or with a tool and of a second part (16) provided with a thread (15), wherein the first part (14) and the second part (16) can be rotated relative to one another about the longitudinal axis (18) of the screw element (10), but can be held axially to one another via a connection point (20), and is composed of an installation (24, 26) which limits the torque that can be transferred from the first part to the second part and which has ratchet noses (26),
wherein the screw element (10) enables a reliable fastening while ensuring the required torque, wherein the screw element (10) has the shape of a hollow bolt or is configured as a sleeve nut, **characterized in that**
the installation limiting the torque comprises at least one ramp part (24; 24') which can rotate with the first part (14) or with the second part (16) in a direction in parallel to the longitudinal axis (18) of the screw element (10) with respect to a spring bias and cooperates with ratchet noses (26) of the respective other part; and
**in that** at least one dog (40) is provided which serves for the rotation of the ramp part (24; 24') together with the first part (14) or the second part (16).

2. A combination in accordance with claim 1,
**characterized in that** the ramp part (24; 24') which can rotate together with the first part (14) or with the second part (16) is equipped with features of shape (25; 25') which are in engagement with complementary features of shape (26) of the corresponding part and which act as dogs.

3. A combination in accordance with claim 2,
**characterized in that** the features of shape (25; 25') of the ramp part are selected from the group comprising axially directed openings, axially directed bores or punched holes, radially inwardly directed noses and radially outwardly directed noses; and the complementary features of shape (26) are selected from the group comprising axially directed posts matched to the shape of the openings, the bores or the punched holes, radially outwardly facing grooves at a cylindrical section of the part entraining the spring ring and radially inwardly facing grooves at an inner wall of the part entraining the spring ring.

4. A combination in accordance with any one of the preceding claims, **characterized in that** the connection point (20) is formed by at least one radial projection at the first part (14) or at the second part (16) and **in that** at least one radial recess is formed in the respective other part.

5. A combination in accordance with claim 4,
**characterized in that** the at least one radial projection is formed by a ring nose and the at least one radial recess is formed by a ring groove.

6. A combination in accordance with any one of the preceding claims, **characterized in that** a spring part (66) is provided between the ramp part (24) and the first part (14) or between the ramp part (24) and the second part (16).

7. A combination in accordance with claim 6,
**characterized in that** the spring part (66) is selected from the group comprising a coil spring, a disk spring, a spiral spring, a Belleville spring and a leaf spring.

8. A combination in accordance with claim 1,
**characterized in that** the ramp part (24; 24') is configured as a spring ring.

9. A combination in accordance with any one of the preceding claims, **characterized in that** the surface of the ramp part (24; 24') which abuts the rotating part (16; 14) or the spring part (66) is planar.

10. A combination in accordance with claim 5,
**characterized in that** the surface of the rotating part (14; 16) abuts the ramp part (24; 24') or the spring part (66) and is formed by a radial shoulder of the rotating part (14; 16).

11. A combination in accordance with any one of the preceding claims,
**characterized in that** the ratchet noses (26) are configured at a second ring which is rotationally fixedly connected to the respective other part (14; 16) or is connected via further dogs.

12. A combination in accordance with claim 11,
**characterized in that** the second ring (24') is likewise configured as a spring ring (24) and possibly has the same formation as the first mentioned spring ring (24).

## Revendications

1. Combinaison d'un tuyau en matière plastique (12) pour appareils de laboratoire et d'un élément de vissage (10), l'élément de vissage (10) étant muni d'un filetage (15) pour la fixation du tuyau en matière plastique (12) à une contrepartie présentant un filetage complémentaire audit filetage (15), telle qu'un raccord à un autre conduit ou un raccord d'appareil, l'élément de vissage (10) étant constitué d'une première partie (14) qui peut être tournée à la main ou avec un outil, et d'une deuxième partie (16) pourvue du filetage (15), la première partie (14) et la deuxième partie (16) pouvant tourner l'une par rapport à l'autre autour de l'axe longitudinal (18) de l'élément de vissage (10), mais pouvant être maintenues axialement l'une contre l'autre par l'intermédiaire d'un emplacement de jonction (20), et constitué d'un dispositif (24, 26) qui limite le couple pouvant être transmis de la première partie à la deuxième partie et qui présente des ergots d'encliquetage (26),
dans laquelle
l'élément de vissage (10) permet un serrage fiable tout en assurant le couple nécessaire,
l'élément de vissage (10) présente la forme d'un boulon creux ou est réalisé sous forme d'écrou à douille,
**caractérisée en ce que**
le dispositif limiteur de couple comprend au moins un élément de rampe (24 ; 24') qui peut tourner avec la première partie (14) ou avec la deuxième partie (16), qui est mobile dans une direction parallèle à l'axe longitudinal (18) de l'élément de vissage (10) à l'encontre d'une précontrainte élastique et qui coopère avec des ergots d'encliquetage (26) de l'autre partie respective,
et **en ce qu'**il est prévu au moins un entraîneur (40) qui sert à faire cotourner l'élément de rampe (24 ; 24') avec la première (14) ou la deuxième partie (16).

2. Combinaison selon la revendication 1,
**caractérisée en ce que**
l'élément de rampe (24 ; 24') pouvant tourner avec la première partie (14) ou avec la deuxième partie (16) est pourvu de caractéristiques de forme (25 ; 25') qui sont en engagement avec des caractéristiques de forme complémentaires (26) de la partie correspondante et qui font office d'entraîneur.

3. Combinaison selon la revendication 2,
**caractérisée en ce que**
les caractéristiques de forme (25 ; 25') de l'élément de rampe sont choisies parmi le groupe comprenant des ouvertures dirigées axialement, des alésages ou trous poinçonnés dirigés axialement, des ergots dirigés radialement vers l'intérieur et des ergots dirigés radialement vers l'extérieur, et les caractéristiques de forme complémentaires (26) sont choisies parmi le groupe comprenant des montants dirigés axialement adaptés à la forme des ouvertures, des alésages ou des trous poinçonnés, des rainures dirigées radialement vers l'extérieur sur une portion cylindrique de la partie entraînant la rondelle élastique, et des rainures dirigées radialement vers l'intérieur sur une paroi intérieure de la partie entraînant la rondelle élastique.

4. Combinaison selon l'une des revendications précédentes,
**caractérisée en ce que**
l'emplacement de jonction (20) est formé par au moins une saillie radiale sur la première partie (14) ou sur la deuxième partie (16) et par au moins une cavité radiale dans l'autre partie respective.

5. Combinaison selon la revendication 4,
**caractérisée en ce que**
ladite au moins une saillie radiale est formée par un ergot annulaire, et ladite au moins une cavité radiale est formée par une rainure annulaire.

6. Combinaison selon l'une des revendications précédentes,
**caractérisée en ce que**
un élément de ressort (66) est prévu entre l'élément de rampe (24) et la première partie (14) ou entre l'élément de rampe (24) et la deuxième partie (16).

7. Combinaison selon la revendication 6,
**caractérisée en ce que**
l'élément de ressort (66) est choisi parmi le groupe comprenant un ressort hélicoïdal, une rondelle-ressort, un ressort en spirale, un ressort Belleville et un ressort à lame.

8. Combinaison selon la revendication 1,
**caractérisée en ce que**
l'élément de rampe (24 ; 24') est réalisé sous forme de rondelle élastique.

9. Combinaison selon l'une des revendications précédentes,
**caractérisée en ce que**
la surface de l'élément de rampe (24 ; 24') qui s'appuie contre la partie co-tournant (16 ; 14) ou contre l'élément de ressort (66) est plane.

10. Combinaison selon la revendication 5,
**caractérisée en ce que**
la surface de la partie co-tournant (14 ; 16) contre laquelle s'appuie l'élément de rampe (24 ; 24') ou l'élément de ressort (66) est formée par un épaulement radial de la partie co-tournant (14 ; 16).

11. Combinaison selon l'une des revendications précédentes,
**caractérisée en ce que**
les ergots d'encliquetage (26) sont formés sur une deuxième rondelle qui est reliée à l'autre partie respective (14 ; 16) solidairement en rotation ou par l'intermédiaire d'autres entraîneurs.

12. Combinaison selon la revendication 11,
**caractérisée en ce que**
la deuxième rondelle (24') est également réalisée sous forme de rondelle élastique (24) et présente le cas échéant la même conception que la rondelle élastique (24) mentionnée en premier lieu.
